(19) Europäisches Patentamt
European Patent Office
Office européen des brevets

(11) **EP 2 620 715 B1**

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(51) Int Cl.:
*F24F 12/00* (2006.01)     *F25B 9/00* (2006.01)
*F24F 5/00* (2006.01)

(21) Anmeldenummer: **12000489.0**

(22) Anmeldetag: **26.01.2012**

(54) **Verfahren zum Betrieb eines Lüftungsheizgerätes und Lüftungsheizgerät**

Method for operating a ventilation heating device and ventilation heating device

Procédé de fonctionnement d'un appareil de chauffage et d'aération et appareil de chauffage et d'aération

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.07.2013 Patentblatt 2013/31**

(73) Patentinhaber: **Stiebel Eltron GmbH & Co. KG 37603 Holzminden (DE)**

(72) Erfinder:
• **Brugmann, Johannes Dr.
37671 Höxter (DE)**

• **Schiefelbein, Kai Dr.
37671 Höxter (DE)**
• **Beber, Fabien
37603 Holzminden (DE)**
• **Schaumlöffel, Michael
37671 Höxter (DE)**
• **Wagner, Enno
37671 Höxter (DE)**
• **Grünig, Lutz
37603 Holzminden (DE)**

(56) Entgegenhaltungen:
**EP-A1- 0 960 756      EP-A1- 2 312 227
WO-A2-2007/080162      FR-A1- 2 922 632**

**Beschreibung**

Die Erfindung betrifft ein Verfahren zum Betrieb eines Lüftungsheizgerätes mit Wärmerückgewinnung. Außenluft wird über einen Luft/Luft-Wärmeübertrager geführt und nimmt im Luft/Luft-Wärmeübertrager Wärme von einer Abluft auf. Fortluft wird in Strömungsrichtung aus dem Luft/Luft-Wärmeübertrager kommend als Wärmequelle auf einen Verdampfer einer Wärmepumpe geleitet, um ein in einem Kältemittelkreislauf enthaltenes Kältemittel zu verdampfen. Zur Fortluft kann Außenluft für einen ausreichenden Energieinhalt beigemischt werden.

Weiterhin betrifft die Erfindung ein Lüftungsheizgerät mit einem Luft/Luft-Wärmeübertrager zur Übertragung von Wärmeenergie aus einem Abluftstrom aus zu beheizenden Räumen auf einen Außenluftstrom mit einem in einer Wärmepumpe in einem Kältemittelkreislauf angeordneten Verdampfer, wobei der Verdampfer mit einem Fortluftstrom aus einem Fortluftkanal beaufschlagbar ist. Eine Öffnung für Außenluft ist vor dem Verdampfer vorgesehen, durch die die Außenluft in die Fortluft für einen ausreichenden Energieinhalt als Wärmequelle beigemischt werden kann, Gemäß DE 10 2005 002 282 A1 ist eine Lüftungsanlage mit einem Wärmeübertrager, der von einem Außenluftstrom beaufschlagt ist, bekannt. Der Wärmeübertrager ist ein Luft/Luft-Wärmeübertrager, in dem ein Abluftstrom aus zu beheizenden Räumen Wärmeenergie auf den Außenluftstrom überträgt. Dabei überträgt die aus dem Wärmeübertrager austretende Fortluft Wärmeenergie an ein im Hochdruckbereich (WPKH) des Wärmepumpenkreises (WPK) im überkritischen Zustand betriebenes Kältemittel.

Bei Vorrichtungen der vorstehend bekannten Art wird in dem Wärmepumpenkreis neben einem Wärmeübertrager für die Erhitzung und/oder die Kühlung des Kältemittels ein zweiter Wärmeübertrager 3 und/oder Wärmeübertrager 6 vorgesehen. Der Wärmepumpenkreis WPK ist zum Betrieb mit einem überkritischen Kältemittel ausgelegt.

Aus DE 197 02 903 C2 ist eine Klimaanlage für mehrere Räume mit einem eine Wärmepumpe umfassenden Zentralgerät bekannt. Vorzugsweise ist ein umschaltbarer Kältemittelkreis der Wärmepumpe und ein Luft/Kältemittel-Wärmetauscher vorgesehen, dem Abluft aus den Räumen und/oder Außenluft zuführbar ist. Ein Hauptwärmetauscher ist zur Beheizung von Räumen angeschlossen, und Konvektoren sind in einem ersten Heizkreis mit erster Umwälzpumpe angeordnet. Ein Nebenwärmetauscher ist zur Beheizung eines Brauchwasserspeichers in einem zweiten Heizkreis angeordnet.

Die WO 2007/080162 A2 beschreibt eine Kühl- und Belüftungseinrichtung mit einem Lufteinlass und einem Luftauslass, einem Ablufteinlass, einem Abluftauslass, einem Verdampfungswärmetauscher, einer Durchfluss-Steuereinheit und einer Steuerung zum Steuern der Durchfluss-Steuereinheit. Der Lufteinlass ist mit einer Außenluftquelle verbunden. Der Luftauslass ist einem Aufenthaltsraum wie dem Inneren eines Gebäudes oder eines Fahrzeugs zugeführt. Auf diese Weise ist eine Kühlung/Lüftung mittels Verdampfung ermöglicht, wobei lediglich zwei Lufteinlässe und zwei Luftauslässe benötigt werden.

Mit den bekannten Vorrichtungen erfolgt eine Wärmerückgewinnung mit einer Wärmepumpe, die die Wärme der Abluft nutzt. Das Wärmeverteilsystem arbeitet in konventioneller Weise wassergeführt. Weiterhin ist ein Lüftungssystem zur Lüftung vorgesehen. Bei modernen Gebäuden, insbesondere Passivhäusern, werden weiterhin energiesparende Maßnahmen der Gebäudehülle mit entsprechenden Kosten durchgeführt.

Aufgabe der Erfindung ist es, auf effiziente und kostengünstige Weise ein Gebäude zu beheizen, insbesondere mit einer Wärmerückgewinnung.

Gelöst ist die Aufgabe mit den Merkmalen des Anspruchs 1.

Bei einem Verfahren zum Betrieb eines Lüftungsheizgerätes zur Wärmerückgewinnung wird Außenluft über einen Luft/Luft-Wärmeübertrager geführt. Die Außenluft nimmt im Wärmeübertrager Wärme von einer Abluft auf, und aus dem Luft/Luft-Wärmeübertrager ist Fortluft als eine Wärmequelle auf einen Verdampfer einer Wärmepumpe geleitet. Ein in einem Kältemittelkreislauf enthaltenes Kältemittel wird im Verdampfer verdampft. Zur Fortluft kann vorteilhaft Außenluft für einen ausreichenden Energieinhalt beigemischt werden. Die vom Luft/Luft-Wärmeübertrager erwärmte Zuluft mit einer ersten Temperatur $T_{Ge}$ von ca. 15 - 20 °C wird in einem Lufterhitzer auf eine zweite Temperatur $T_{Ga}$ erwärmt, und die zweite Temperatur $T_{Ga}$ liegt über einer Temperatur $t_{AB}$ der Abluft, insbesondere zwischen 20 und 60 °C, besonders vorteilhaft zwischen 25 und 50 °C. In einem Gaskühler des Lufterhitzers gibt $CO_2$ als Kältemittel in einem überkritischen Zustand Wärme an die Zuluft ab, so dass die Zuluft die Temperatur $T_{Ga}$ erreicht. Im Gaskühler wird das Kältemittel dabei von einem ersten Zustand mit einer ersten Temperatur ($t_{Üe}$), die überkritisch ist, auf einen zweiten Zustand mit einer zweiten Temperatur ($t_{Üa}$) bei einem nahezu isobaren Druck, der vorzugsweise zwischen 73,8 und ca. 80 bar liegt, abgekühlt. In seiner Strömungsrichtung wird das $CO_2$ im Weiteren vor dem Verdampfer durch eine Drossel auf einen Druck unterhalb von 73 bar expandiert.

Gemäß einem Gedanken der Erfindung strömt das $CO_2$ in einer Strömungsrichtung zumindest teilweise entgegen der Strömungsrichtung der Zuluft in den Gaskühler des Lufterhitzers. Das $CO_2$ kühlt sich dabei in einem Temperaturband zwischen ca. 90 °C und ca. 20 °C kontinuierlich ab, und die Zuluft wird im Gaskühler in einem Temperaturband mit einem unteren ersten Temperaturwert ($t_{Ge}$) von ca. 15 - ca. 20 °C, insbesondere ca. 17 - 19°C, und einem oberen zweiten Temperaturwert ($t_{Ga}$) von ca. 25 - ca. 60 °C, insbesondere 30 - 50°C kontinuierlich erwärmt. Die Temperaturverläufe der sich erwärmenden Zuluft und des sich abkühlenden $CO_2$ schmiegen sich somit ohne abrupte Temperatursprünge oder Temperaturrampen aneinander an, und eine Zunahme der Entropie und ein Verlust an Exergie sind bei der Wärmeübertragung minimiert.

Vorteilhaft wird die Drehzahl zumindest eines Verdichters des Kältemittelkreislaufs für einen kontinuierlichen Betrieb des Lüftungsheizgerätes über ein Zeitintervall von mehr als ca. 1 h ohne Ein- und Ausschalten geregelt. Die Drehzahl des Verdichters ist dabei nicht an eine konstante Temperatur $t_{Ga}$ der Zuluft gebunden und erfolgt abhängig von einem erforderlichen Wert. Somit wird die Drehzahl insbesondere abhängig von einem Wert eines Leistungsbedarfs, eines Hochdrucks der Wärmepumpe oder einer Temperatur wie der Temperatur $t_{AU}$ der Außenluft oder der Temperatur ($t_R$) der Raumluft geregelt.

In einem vorteilhaften Verfahren gibt das $CO_2$ in einem Kältemittelunterkühler eines Luftvorwärmers, der in Strömungsrichtung des Kältemittels hinter dem Gaskühler und vor der Drossel liegt, gerade so viel Enthalpie zur Unterkühlung des Kältemittels vor dem Luft/Luft-Wärmeübertrager an die strömende Außenluft ab, dass wenigstens ein Einfrieren des Luft/Luft-Wärmeübertragers verhindert ist. Bei tiefen Temperaturen ($t_{AU}$) der Außenluft unter -5 °C ist insbesondere die Temperatur ($t_{Ga}$) der Zuluft ein Wert, mit dem die Drehzahl des Verdichters derart geregelt wird, dass der Luft/Luft-Wärmeübertrager nicht einfriert oder, sofern hierzu vorteilhaft eine höhere Leistung und/oder Drehzahl des Verdichters benötigt wird, wird die Temperatur ($t_{AU}$) der Außenluft hinter dem Kältemittelunterkühler auf eine Temperatur ($t_{AU}$) von mindestens -5 - +3 °C gebracht.

Gemäß einem vorteilhaften Gedanken wird eine Abtauphase des Verdampfers nach Erkennung einer unzulässig starken Vereisung des Verdampfers eingeleitet. Vorteilhaft erfolgt eine Heißgasbypass-Abtauung, wobei der Gaskühler umgangen wird. Beim Abtauen ist dann kein Kältemittel durch den Gaskühler geführt, wodurch eine Abkühlung der Zuluft beim Abtauen vermieden ist. Die Lüftung durch den Luft/Luft-Wärmeübertrager erfolgt beim Abtauen vorteilhaft weiter, insbesondere mit einem kleineren Luftvolumenstrom als im Heizbetrieb. Vorteilhaft wird zumindest ein Zuluftventilator oder ein Ventilator, der Außenluft durch den Luft/Luft-Wärmeübertrager bläst, gedrosselt oder angehalten.

Vorteilhaft ist es weiterhin, in einem Zeitraum von ca. 5 min bis ca. 1 h vor einer Warmwasserbereitung, bei der das Kältemittel durch einen Gaskühler eines Warmwasserwärmeaustauschers für Warmwasser geleitet ist, eine zeitweise Anhebung der Temperatur $t_{GA}$ der Zuluft über einen berechneten Solltemperaturwert $t_{GAsoll}$ der Zuluft oder der Raumtemperatur $t_{Rsoll}$ um etwa 0,1 - 1,5 °C, insbesondere ca. 0,5 °C, hinaus erfolgt. Dadurch wird ein Gebäude vor der Warmwasserbereitung überheizt und kann sich während der Warmwasserbereitung etwa auf die gewünschte Raumtemperatur $t_R$ wieder abkühlen. Während der Warmwasserbereitung wird vorteilhaft nur sehr wenig oder gar keine Wärme an die Zuluft abgegeben.

Gemäß einem Gedanken der Erfindung wird auch bei der Warmwasserbereitung im Nachgang eine Kältemittelunterkühlung durchgeführt. Das Kältemittel wird erst dem Warmwasserwärmeaustauscher zugeführt und strömt danach in einen Kältemittelunterkühler. Der Kältemittelunterkühler sitzt im Außenluftstrom vor dem Luft/Luft-Wärmeübertrager und dient dazu, wenigstens so viel Wärme an die Außenluft abzugeben, dass der Luft/Luft-Wärmeübertrager gerade nicht vereist. Im Falle der Warmwasserbereitung ist es vorteilhaft, den Luftvolumenstrom der Zuluft zu drosseln, damit weniger Energie für die Eisfreihaltung benötigt wird und mehr Energie für die Warmwasserbereitung bereitsteht. Die Außenluft wird vorteilhaft auf eine Temperatur von -5 - +3 °C erwärmt.

Vorteilhaft ist ein Lüftungsheizgerät mit einem Luft/Luft-Wärmeübertrager zur Übertragung von Wärmeenergie aus einem Abluftstrom aus zu beheizenden Räumen auf einen Außenluftstrom vorgeschlagen. In einer Wärmepumpe ist in einem Kältemittelkreislauf ein Verdampfer angeordnet. Der Verdampfer ist mit einem Fortluftstrom aus einem Fortluftkanal beaufschlagbar. Weiterhin ist vorteilhaft eine Öffnung für Außenluft vor dem Verdampfer vorgesehen, durch die die Außenluft in die Fortluft für einen ausreichenden Energieinhalt als Wärmequelle beigemischt werden kann.

Ein Gaskühler des Kältemittelkreislaufs ist weiterhin vorteilhaft in einem Zuluftkanal angeordnet. Der Gaskühler ist in Luftströmungsrichtung einer Zuluft hinter dem Luft/Luft-Wärmeübertrager angeordnet. Die Außenluft wird vorteilhaft nach einem Venturi-Prinzip in die mit einer Geschwindigkeit strömende Fortluft gesaugt oder auch mittels eines Ventilators der Fortluft beigemengt.

Im Kältemittelkreislauf ist $CO_2$ als Kältemittel eingefüllt, und Wärme wird im Heizbetrieb vom überkritischen $CO_2$ als Kältemittel auf die Zuluft hinter dem Luft/Luft-Wärmeübertrager übertragen.

Der Anteil der Außenluft beträgt etwa das 0- bis 5-fache des Volumenstroms der Fortluft, bei einer Außentemperatur von ca. 10 °C vorteilhaft etwa das 0,5-fache, bei 0 °C etwa das 0,8-fache und bei -10 °C etwa das 1-fache der Fortluft.

Gemäß einem Gedanken der Erfindung ist das Lüftungsheizgerät **dadurch gekennzeichnet, dass** ein Kältemittelunterkühler in Strömungsrichtung hinter dem Gaskühler und vor der Drossel angeordnet ist. Der Kältemittelunterkühler ist vorteilhaft in Strömungsrichtung der Außenluft vor dem Luft/Luft-Wärmeübertrager angeordnet, und durch Abgabe von Enthalpie wird das überkritische $CO_2$ unterkühlt, und ein Einfrieren des Luft/Luft-Wärmeübertragers ist verhindert. Vorteilhaft wird im Kältemittelunterkühler eine Enthalpie von ca. 0 bis 50 kJ/kg vom Kältemittel an die Außenluft abgegeben, die sich dabei auf bis zu ca. -5 - +3 °C erwärmt. Dabei kann die Außenluft durchaus Temperaturen von bis zu unter -20 °C aufweisen, so dass dabei ein Temperaturhub von bis zu 15 K oder mehr erfolgt.

Gemäß einem vorteilhaften Gedanken der Erfindung ist ein Gebäude mit einem entsprechenden Lüftungsheizgerät und einem an das Lüftungsheizgerät angeschlossenen Luftverteilsystem ausgestattet und mit Luft beheizt. Das Gebäude weist vorteilhaft einen spezifischen Wert des Wärmebedarfs $Q_a$ von weniger als 20 kWh/m² pro Jahr auf. Das Lüftungsheizgerät des Gebäudes weist vorteilhaft eine spezifische Heizleistung von ca. 5 bis 20 W/m², insbesondere 7 bis 15 W/m² auf.

Durch Multiplikation der spezifischen Heizleistung und der Wohnfläche ergibt sich die Heizleistung des Lüftungsheizgerätes. Bei 150 m² und einer spezifischen Heizleistung von 10 W/m² hat das Lüftungsheizgerät eine Heizleistung von 1500 W, mit der ein entsprechendes Passivhaus vorzugsweise nur mit Luft beheizt wird.

Das Lüftungsheizgerät des Gebäudes weist gemäß einem anderen Gedanken der Erfindung eine thermische Leistung auf, die sich aus der Multiplikation der Wohnfläche $m_w$ des zu beheizenden Gebäudes in Quadratmetern [m²] mit dem spezifischen Wert des Wärmebedarfs geteilt durch einen Korrekturwert K ergibt. Der Korrekturwert K liegt vorteilhaft zwischen 500/a und 3000/a, insbesondere zwischen 1000/a und 2000/a und besonders vorteilhaft zwischen 1200/a und 1500/a. Das Ergebnis wird noch durch 1000 geteilt, wodurch sich etwa die Heizleistung des Lüftungsheizgerätes in Watt ergibt. Der Korrekturwert ist weiterhin vorteilhaft abhängig von der Personenanzahl oder dem Warmwasserverbrauch des Gebäudes.

Somit wird bei einem Gebäude mit 200 m² Wohnfläche und einem spezifischen Wärmebedarf von 10 kWh/a und bei einem Normpunkt von -15 °C Außentemperatur die Heizleistung des Luftheizgerätes wie folgt ermittelt:

$$200 \text{ m}^2 * 10 \text{ kWh/m}^2\text{a} = 2000 \text{ kWh/a}$$

Der Jahreswärmebedarf beträgt somit 2000 kWh/a. Dieser Wert wird durch einen Korrekturfaktor K=1400/a dividiert und durch 1000 dividiert:

$$2000 \text{ kWh/a} : 1400\text{/a} : 1000 = 1429 \text{ W}$$

Somit ergibt sich eine Heizleistung des Lüftungsheizgerätes von wenigstens 1429 W, die über Zuluft in das Gebäude geführt werden muss.

In der Regel sind Lüftungsheizgeräte mit stufigen Heizleistungen verfügbar. Seitens des Geräteherstellers wird ein Gerät in das Gebäude verbracht, welches vorteilhaft mindestens die erforderliche Heizleistung aufweist.

Weitere vorteilhafte Ausgestaltungen werden nachfolgend anhand von Ausführungsbeispielen der Erfindung unter Bezugnahme auf die Abbildungen näher beschrieben. Es zeigen:

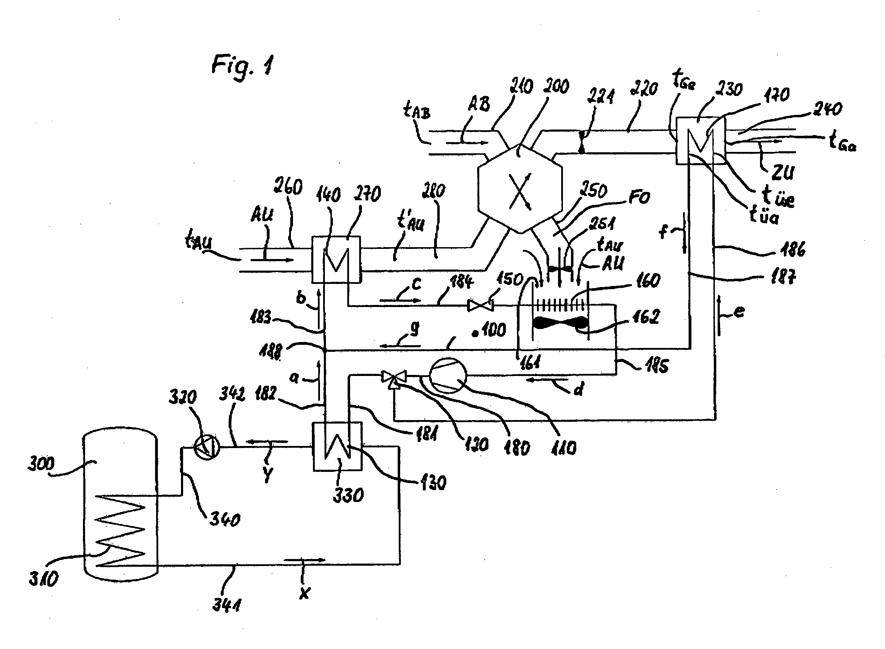

Figur 1 ein schematisches Schaltbild einer ersten Ausführungsform der Erfindung,

Figur 2 ein zu dem Wärmepumpenkreis von Fig. 1 gehöriges Druck-Enthalpie-Diagramm,

Figur 3 einen angeschmiegten Temperaturverlauf des überkritischen $CO_2$ an die sich aufwärmende Zuluft,

Figur 4 ein schematisches Schaltbild einer zweiten Ausführungsform der Erfindung im Abtaubetrieb.

Ein Lüftungsheizgerät 1 weist einen Kältemittelkreislauf 100 und wenigstens einen Luft/Luft-Wärmeübertrager 200 auf. Vorteilhaft ist im Ausführungsbeispiel weiterhin ein Warmwasserbehälter 300 angeschlossen. Der Kältemittelkreislauf 100 weist einen Verdichter 110, vorteilhaft ein Dreiwegeventil 120, einen Verdampfer 160 und eine Drossel 150 auf. Über dem Dreiwegeventil 120 ist ein Gaskühler 170 angeschlossen, der sich in einem Lufterhitzer 230 befindet. Der Gaskühler 170 für Luft ist über eine Zuleitung 186 und eine Ableitung 187 für Kältemittel an den Kältemittelkreislauf 100 angeschlossen. Je nach Stellung des Dreiwegeventils 120 wird entweder der Gaskühler 170 für Luft oder ein Gaskühler 130 für eine Warmwasserbereitung in den Warmwasserbehälter 300 im Kältemittelkreislauf eingebunden. Der Gaskühler 130 für Warmwasser ist über eine Leitung 181 mit dem Dreiwegeventil 120 verbunden. Weiterhin ist der Gaskühler 130 für Warmwasser über eine Leitung 182 in Verbindung mit einer Leitung 183 mit einem Kältemittelunterkühler 140 verbunden. An einem Knoten 188 trifft die Ableitung 187 vom Gaskühler 170 Luft auf die Leitung 182, mit der der Gaskühler 130 für Warmwasser mit dem Knoten 188 verbunden ist.

Der Verdichter 110 ist über eine Leitung 180 mit dem Dreiwegeventil 120 verbunden. Weiterhin ist der Verdichter 110 über eine Leitung 185 mit dem Verdampfer 160 verbunden. Dieser Verdampfer 160 ist wiederum mit der Drossel 150 verbunden, wobei die Drossel in Strömungsrichtung c des Kältemittels vor dem Verdampfer 160 liegt. In Strömungsrichtung c betrachtet liegt die Drossel 150 hinter dem Kältemittelunterkühler 140. Die Verbindung des Kältemittelunterkühlers 140 und der Drossel 150 erfolgt mit der Leitung 184. Vor dem Verdampfer 160 des Kältemittelkreislaufs 100 ist eine Öffnung 161 vorgesehen, über die dem Verdampfer 160 Außenluft AU zuführbar ist.

Die Außenluft AU wird dem Kältemittelunterkühler 140 mit einer Außenlufttemperatur $t_{au}$ zugeführt. Die Außenluft AU durchströmt den Kältemittelunterkühler 140 und erwärmt sich dabei. Über einen Außenluftkanal 280 strömt die Außenluft AU dann weiter zum Luft/Luft-Wärmeübertrager 200. Diesem Luft/Luft-Wärmeübertrager 200 wird weiterhin Abluft AB mit einer Ablufttemperatur $T_{AB}$ über einen Abluftkanal 210 zugeführt. Mit der Abluft AB wird die Außenluft AU bei einer stofflichen Trennung erwärmt. Es erfolgt im Luft/Luft-Wärmeübertrager 200 ein Wärmeübergang von der Abluft AB auf die Außenluft AU. Die so erwärmte Außenluft AU wird von einem Zuluftventilator 221 durch einen Zuluftkanal 220 gefördert und tritt mit einer Temperatur $T_{Ga}$ der Zuluft ZU in die Lufterhitzer 230 ein. Im Lufterhitzer 230 wird die Zuluft ZU erwärmt und strömt weiter als Zuluft ZU über einen Zuluftanschluss 240 in ein nicht dargestelltes Gebäude bzw. in ein nicht dargestelltes Luft-Verteilungssystem eines Gebäudes.

Die im Luft/Luft-Wärmeübertrager 200 abgekühlte Abluft AB strömt als Fortluft FO aus dem Luft/Luft-Wärmeübertrager 200 aus. Gefördert wird die Fortluft mit einem Fortluftventilator 251. Der Fortluftkanal 250 ist im Ausführungsbeispiel so auf den Verdampfer 160 gerichtet oder mit dem Verdampfer 160 verbunden, dass die Fortluft FO auf den Verdampfer 160 geleitet ist. Vorteilhaft ist es weiterhin, zur Fortluft FO Außenluft AU hinzu zu mischen. Diese Außenluft AU wird im Ausführungsbeispiel durch das Venturi-Prinzip in die strömende Fortluft FO gemischt und diese Mischung aus Fortluft FO und Außenluft AU dem Verdampfer 160 zugeführt. Im normalen Heizbetrieb ist der Gaskühler 170 für Luft von Kältemittel durchströmt, welches vom Verdichter 110 von einem niedrigen Druck, insbesondere von ca. 20 - 50 bar in der Leitung 185, auf einen hohen Druck, insbesondere von über 73 bar in der Zuleitung 186, verdichtet wird. Im Gaskühler 170 für Luft wird Wärme vom Kältemittel auf die Zuluft ZU übertragen. Weiterhin strömt das Kältemittel durch die Ableitung 187 und durch die Leitung 183 in Strömungsrichtung g und b zum Kältemittelunterkühler 140. Hier wird das Kältemittel weiter durch die kalte Außenluft mit der Außenlufttemperatur $T_{AU}$ unterkühlt und strömt dann weiter in Strömungsrichtung c zur Drossel 150, wo es dann entspannt wird und zumindest dann in einem flüssigen Zustand in den Verdampfer 160 geleitet wird. Im Verdampfer 160, dem die Mischung aus Fortluft FO und Außenluft AU zugeführt wird, wird das Kältemittel wieder verdampft und strömt in Richtung d in der Leitung 185 zum Verdichter 110. Somit wird der am Ende einem Raum zugeführten Zuluft ZU vorteilhaft in mehrfacher Weise Wärme zugeführt, erstens im Kältemittelunterkühler 140, insbesondere um hier sicherzustellen, dass der Luft/Luft-Wärmeübertrager 200 nicht einfriert, zweitens im Luft/Luft-Wärmeübertrager 200 die dort als Außenluft AU eingetretene Luft Wärme von der Abluft AB aufnimmt, und eine dritte Erwärmung erfährt die dann als Zuluft ZU bezeichnete ehemalige Außenluft AU im Lufterhitzer 230, so dass eine Zulufttemperatur bereitgestellt wird, die über der geforderten Raumtemperatur liegt. Vorteilhaft erfolgt eine weitere Erwärmung der Zuluft ZU durch den Zuluftventilator 221, denn die im Zuluftventilator 221 umgesetzte Energie wird nicht vollständig in Strömungsenergie umgesetzt. Verlustbehaftete Wärmeenergie wird an dieser Stelle des Zuluftventilators 221 ebenfalls als Wärme der Zuluft ZU zugeführt. Diese sozusagen vierte Lufterwärmung ist im Vergleich zu den drei anderen Erwärmungen der Zuluft allerdings sehr gering.

Im Ausführungsbeispiel ist eine Luftheizung gezeigt, mit der ein Gebäude mit einem geringen Wärmebedarf wie bei einem Passivhaus von ca. 1 - 2 kWh bei einer Außentemperatur von ca. -10 - -15 °C beheizt werden kann. Bei Passivhäusern mit geringem Wärmebedarf von 20 kWh/m$^2$ und Jahr und weniger kann mit der Luftheizung vorteilhaft eine vollständige Beheizung erfolgen. Der Vorteil der Erfindung liegt insbesondere darin, dass nur mit Luft geheizt wird und auf ein mit Wasser gefülltes Verteilsystem verzichtet werden kann. Die gesamte Wärme, die dem Gebäude zur Heizung zugeführt wird, wird über die Zuluft ZU in das Gebäude abgegeben. Daher wird die Zuluft ZU bei einer Außentemperatur von ca. -10 oder -15 °C auf etwa 50 °C erhitzt. Bei einem Gebäude zwischen 150 und 200 m$^2$ Wohnfläche erfolgt eine vollständige Beheizung ausschließlich über die Zuluft ZU. Vorteilhaft wird mit dem System, wie bereits beschrieben, Fortluft FU und vorzugsweise zugemischte Außenluft AU als Mischluft dem Verdampfer 160 zugeführt. Bei einer Mischung von Fortluft zu Außenluft ergibt sich bei einer Außentemperatur von ca. -15 °C und einer Fortlufttemperatur von ca. -10 °C eine etwas über der Außenluft liegende Temperatur, die dem Verdampfer zugeführt wird. Die Außenluft wird vorteilhaft bereits durch den Kältemittelunterkühler 140 vorgewärmt und weitere große Wärmemengen werden im Luft/Luft-Wärmeaustauscher 200 aufgenommen. Hie Zuluft ZU tritt bereits mit einer Temperatur von ca. 18 °C (15 - 20 °C) in den Lufterhitzter 230 ein und wird hier dann auf ca. 50 °C erwärmt. Bei der beschriebenen Verwendung von $CO_2$ als Kältemittel ergibt sich ein besonderer Vorteil durch geringe Exergieverluste und durch einen relativ geringen Anstieg der Entropie. Insbesondere dadurch, dass die Luft im Gaskühler nur von ca. 15 - 20 °C auf ca. 30 - 50 °C erwärmt werden muss.

Vorteilhaft ist der Verdampfer 160 der Wärmepumpe mit einem Luftstrom beaufschlagt, der zusätzlich von einem Verdampferventilator 162 erzeugt ist.

Der Verdampferventilator 162 kann insbesondere auch als Fortluftventilator 251 arbeiten und fördert dann Fortluft FO und Außenluft AU allein, wobei der Fortluftventilator entfällt. In einem anderen vorteilhaften Ausführungsbeispiel ist der Verdampferventilator zusätzlich zum Fortluftventilator angeordnet. Weiterhin ist gemäß einem vorteilhaften Ausführungsbeispiel nur ein Fortluftventilator 251 vorgesehen, der insbesondere in Kombination mit der Öffnung 161 auch Außenluft zumindest indirekt ansaugt und auf den Verdampfer fördert.

In einem anderen Zustand, nämlich der Warmwasserbereitung, ist das Dreiwegeventil 120 so gestellt, dass ausgehend vom Verdichter das Kältemittel zum Gaskühler 130 geleitet wird. Der im Warmwasserwärmetauscher 330 angeordnete Gaskühler 130 gibt Wärme auf ein in Leitungen 340, 341, 342 strömendes Wasser ab. Das Wasser lädt entweder direkt einen Warmwasserbehälter 300 auf oder indirekt - wie im Ausführungsbeispiel - mit einem im Warmwasserbehälter 300 angeordneten Wärmeaustauscher 310. Das Wasser wird in den Leitungen 340, 341, 342 durch eine Umwälzpumpe 320 umgetrieben. Die Warmwasserbereitung erfolgt so lange, bis eine Warmwasser-Solltemperatur im Warmwasserbehälter 300 erreicht ist.

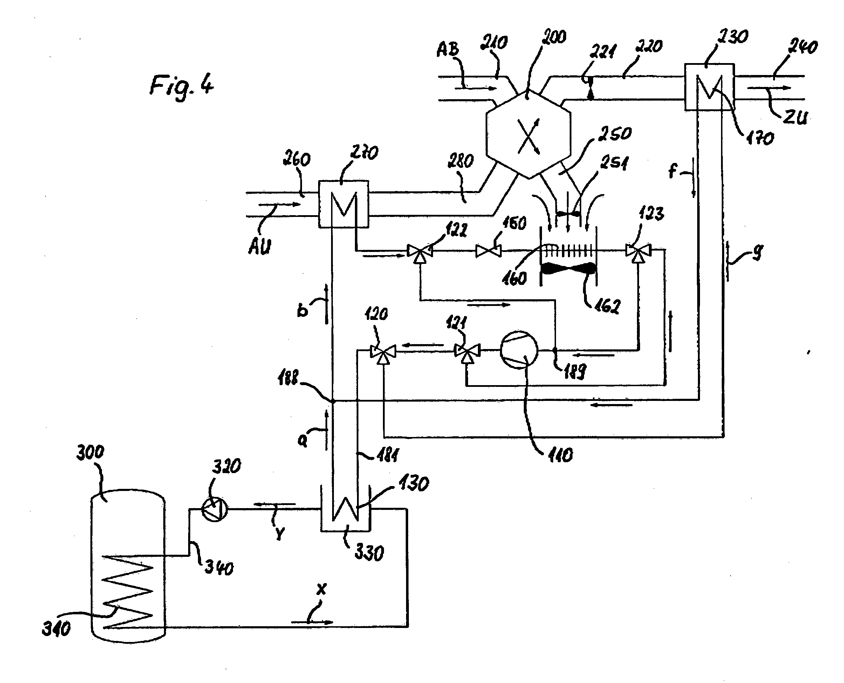

In einem anderen Ausführungsbeispiel gemäß Fig. 4 sind zusätzlich drei weitere Dreiwegeventile vorgesehen, mit denen eine sogenannte Heißgasabtauung des Verdampfers 160 erfolgt. Ein zweites Dreiwegeventil 121 ist noch zwischen dem Verdichter 110 und dem Dreiwegeventil 120 angeordnet. Zum Abtauen wird das Dreiwegeventil 121 so geschaltet, dass das Kältemittel direkt zum Verflüssiger 160 geleitet wird. Dabei durchströmt es ein drittes Dreiwegeventil 123 direkt zum Verdampfer 160. Dort wird die im Verdichter aufgenommene Wärme im Verdampfer zum Abtauen abgegeben. Somit durchströmt das Kältemittel im Zustand des Abtauens nur den Verdichter 110, den Verdampfer 160 sowie die Drossel 150. Der Kältemittelunterkühler 140, der Gaskühler 170 für Luft und der Gaskühler 130 für Warmwasser werden vorteilhaft nicht durchströmt. Im Heizbetrieb ist gemäß diesem Ausführungsbeispiel das zweite Dreiwegeventil 121 so gerichtet, dass das Kältemittel zum Dreiwegeventil 120 strömt und von dort über die Zuleitung 186 zum Gaskühler 170 für Luft. Vom Gaskühler 170 für Luft strömt es weiter zum Knoten 188 und von dort zum Kältemittelunterkühler 140. Vom Kältemittelunterkühler 140 strömt das Kältemittel zum vierten Dreiwegeventil 122, welches so gestellt ist, dass das Kältemittel direkt zur Drossel 150 strömt, dort expandiert wird und dann in den Verdampfer 160 strömt. Ausgehend vom Verdampfer 160 strömt das Kältemittel zum dritten Dreiwegeventil 123, welches so gestellt ist, dass das Kältemittel direkt zum Verdichter 110 strömt. An einem weiteren Knoten 189 strömt das Kältemittel direkt zum Verdichter 160, da das vierte Dreiwegeventil aus dieser Richtung geschlossen ist.

Die Strömungsrichtungen a, b, c, d ,e, f und g geben die Strömungsrichtung des Kältemittels im Heizbetrieb an.

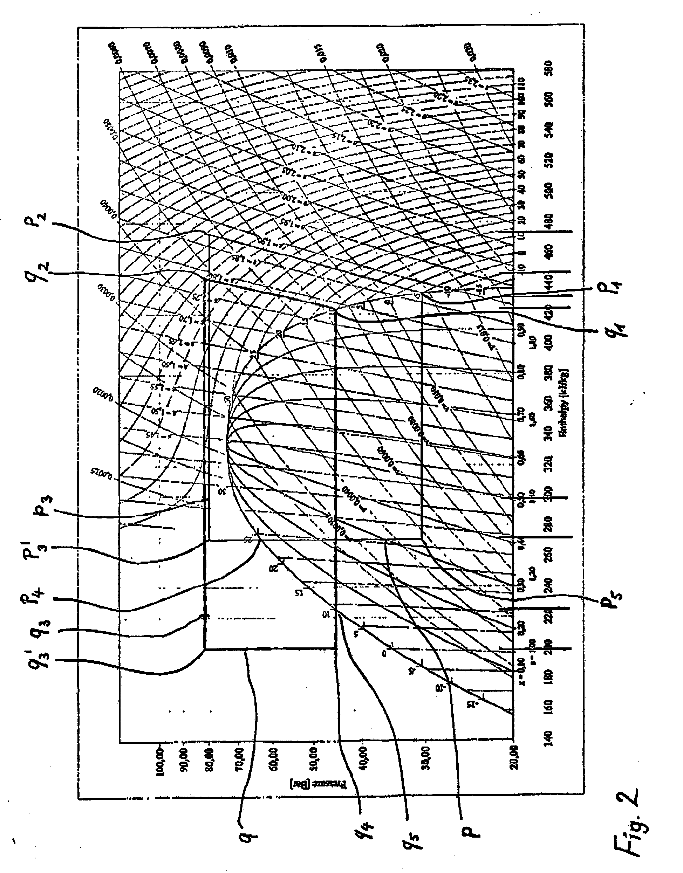

Gemäß Fig. 2 sind zwei beispielhafte Verfahren bei beispielhaften Temperaturen gezeigt. Ein erster Kreisprozess q bezieht sich auf eine Außentemperatur von um die 10 - 15 °C bei einer in der Regel gewünschten Raumtemperatur von ca. 20 - 22 °C. Ausgehend von einem Punkt $q_1$ beträgt die Energie des Kältemittels 425 kJ/kg bei ca. 10 °C und ca. 45 bar. Das Kältemittel wird auf einen Punkt $q_2$ mit einer Enthalpie von ca. 438 kJ/kg bei ca. 55 °C und ca. 80 bar verdichtet. Vom Verdichter aus wird das Kältemittel zum Gaskühler 170 für Luft geleitet und gibt hier Enthalpie ab, so dass das aus dem Gaskühler 170 für Luft austretende Kältemittel etwa eine Enthalpie von 220 kJ/kg an einem Punkt $q_3$ mit ca. 10 °C und ca. 80 bar aufweist. Eine weitere Unterkühlung bzw. Wärmeabgabe des Kältemittels erfolgt hin zu einem Punkt $q_3'$, an dem das Kältemittel eine Enthalpie von 200 kJ/kg mit ca. 0 °C bei ca. 80 bar aufweist. Im Kältemittelunterkühler 140 hat das Kältemittel etwa eine Enthalpie von ca. 220 auf ca. 200 kJ/kg an die Außenluft AU abgegeben. Danach strömt das Kältemittel zur Drossel 150 und es erfolgt ausgehend vom Punkt $q_3'$ eine Expansion im idealisierten Zustand auf einer Enthalpie von ca. 200 kJ/kg zum Punkt $q_4$ mit einem Druck von etwa 436 bar und einer Temperatur von ca. 0 °C. Das Kältemittel strömt weiter zum Verdampfer 160, wo es vom Zustand $q_4$ wieder in die Enthalpie von 200 auf 425 kJ/kg bei einem Druck von ca. 45 bar und auf eine Temperatur von 10 °C ansteigt. An einem Punkt p5 bei ca. 45 bar und einer Enthalpie von ca. 220 kJ/kg geht das Kältemittel $CO_2$ in den Nassdampf-Zustand über.

Der zweite Prozess p, der in Fig. 2 dargestellt ist, betrachtet in etwa eine Außentemperatur von -5 - -15 °C, insbesondere ca. -10 °C. Dann wird dem Verdampfer 160 Außenluft AU und Fortluft FO so zugeführt, dass die Mischtemperatur der dem Verdampfer zugeführten Mischung aus Außenluft AU und Fortluft f0 etwas über der Temperatur $t_{AU}$, insbesondere bei ca. 1 - 5 °C liegt. Ausgehend von einer Enthalpie von 275 kJ/kg an einem Punkt $p_5$ nimmt das Kältemittel im Verdampfer 160 Enthalpie bis zu einem Wert von ca. 438 kJ/kg oder 440 kJ/kg auf. Dann wird das Kältemittel vom Punkt $p_1$ mit -5 °C bei ca. 30 bar auf den Punkt $p_2$ mit 68 °C und ca. 80 bar verdichtet, wodurch eine weitere Enthalpie-Zunahme auf ca. 475 kJ/kg erfolgt. Am Punkt $P_2$ beträgt der Druck etwa 80 bar, wodurch das Kältemittel ausgehend vom Punkt $p_1$ grob um ca. 50 bar im Druck angehoben ist. Desweiteren strömt das Kältemittel nun durch den Gaskühler 170 für Luft, und die Enthalpie wird vom Punkt $p_2$ auf einen Punkt $p_3$ auf ca. 290 kj/kg bei 30 °C und ca. 80 bar reduziert. Eine weitere Reduzierung auf ca. 275 kJ/kg bei ca. 27 °C und ca. 80 bar erfolgt dann im Kältemittelunterkühler 140. Das Kältemittel wird hiernach der Drossel 150 zugeführt, wo es im Druck von ca. 80 bar auf ca. 30 bar bei ca. -5 °C reduziert wird. Die Druckreduktion erfolgt hier in idealisierter Weise isenthalp. An einem Punkt $p_4$ bei ca. 60 bar und einer Enthalpie von ca. 270 kJ/kg geht das Kältemittel $CO_2$ in den Nassdampf-Zustand über.

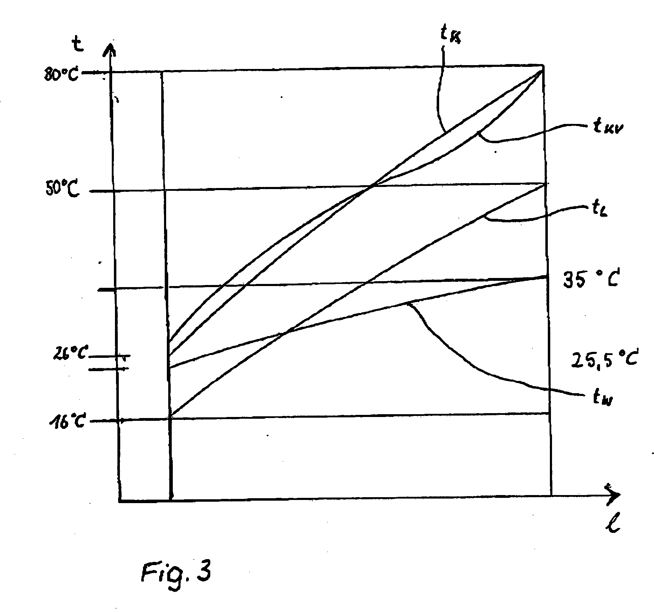

Gemäß Fig. 3 ist beispielhaft der Temperaturverlauf des Kältemittels und der Luft sowie im Falle der Warmwasserbereitung des Wassers aufgezeigt. Die bereits im Luft/Luft-Wärmeübertrager 200 auf ca. 16 °C vorerwärmte Luft strömt nach dem Luft/Luft-Wärmeübertrager, vom Zuluftventilator 221 angetrieben, durch den Gaskühler 170 für Luft. Im Falle einer ca. 16 °C aufweisenden Temperatur $t_{Ga}$ der Zuluft ZU wird bei einem zumindest teilweise in dem Gegenstrom arbeitenden Gaskühler 170 an dieser Stelle das durch die Zuluft ZU bereits abgekühlte Kältemittel mit etwa 26 °C aus dem Gaskühler 170 für Luft austreten und in die Ableitung 187 mit ca. 26 °C einströmen. Auf der Eingangsseite des Kältemittels tritt das Kältemittel mit einer Temperatur $t_{Üa}$ von ca. 80 °C in den Gaskühler 170 für Luft ein. An dieser Stelle hat sich die Zuluft bereits am Gaskühler 170 für Luft erwärmt und hat beim Austritt aus dem Gaskühler 170 für Luft eine Temperatur von ca. 50 °C erreicht. Im Diagramm in Fig. 2 verläuft der Anstieg der Lufttemperatur $t_{Ge}$ von ca. 16 °C auf einen Temperaturwert $t_{Ga}$ auf ca. 50 °C. Der Eingangswert der Temperatur des Kältemittels $t_{Üe}$ beträgt ca. 80 °C und der Ausgangswert der Temperatur des Kältemittels $t_{Üa}$ bar beträgt ca. 26 °C. Der idealisierte Temperaturverlauf des Kältemittels ist in Fig. 3 mit $t_k$ ideal bezeichnet und ein möglicher realer Verlauf der Temperatur über eine Länge I des Gaskühlers 170 für Luft des Kältemittels $CO_2$ ist als $t_{kv}$ bezeichnet. Beide Temperaturverläufe $t_k$ real und $t_{kv}$ weisen keine Temperatursprünge oder abrupten Temperaturänderungen auf. Bei diesem Temperaturabfall von ca. 80 auf ca. 26 °C verliert das Kältemittel entsprechende Enthalpie von ca. 180 - 300 kJ/kg, entsprechende Wärme wird an die Luft übertragen. Auch der Temperaturverlauf $t_L$ erfolgt ohne weitere Sprünge. So verhält es sich auch, wenn eine Warmwasserbereitung erfolgt. Nur ist hier der Temperaturunterschied geringer, zumindest zu Anfang der Warmwasserbereitung, die bei ca. 35 °C beginnen sollte, damit ein vernünftiges Duschen oder Ähnliches erfolgen kann. Das Warmwasser soll in der Temperatur $t_w$ auf wenigstens 50 °C angehoben werden.

Vorteilhaft ist der Luft/Luft-Wärmeübertrager als Kreuz-Gegenstrom-Wärmeaustauscher oder Gegenstrom-Wärmeaustauscher ausgebildet.

**Patentansprüche**

1.  Verfahren zum Betrieb eines Lüftungsheizgerätes (1) mit Wärmerückgewinnung, in dem Außenluft (AU) über einen Luft/Luft-Wärmeübertrager (200) geführt wird, die Außenluft (AU) im Wärmeübertrager (200) Wärme von einer Abluft (AB) aufnimmt, aus dem Luft/Luft-Wärmeübertrager (200) Fortluft (FO) als Wärmequelle auf einen Verdampfer (160) einer Wärmepumpe geleitet ist, um ein in einem Kältemittelkreislauf (100) enthaltenes Kältemittel zu verdampfen, und zur Fortluft (FO) Außenluft (AU) für einen ausreichenden Energieinhalt beigemischt werden kann, enthaltend die Verfahrensschritte,

    - dass die vom Luft/Luft-Wärmeübertrager (200) erwärmte Zuluft (ZU) mit einer ersten Temperatur ($t_{Ge}$)von ca. 15 - 20 °C in einem Lufterhitzer (230) auf eine zweite Temperatur ($t_{Ga}$) erwärmt wird, die über einer Temperatur ($t_{AB}$) der Abluft (AB) liegt,
    - in einem Gaskühler (170) des Lufterhitzers (230) $CO_2$ als Kältemittel in einem überkritischen Zustand Wärme an die Zuluft (ZU) abgibt,
    - im Gaskühler (170) das Kältemittel von einem ersten Zustand mit einer ersten Temperatur ($t_{Üe}$), die überkritisch ist, auf einen zweiten Zustand mit einer zweiten Temperatur ($t_{Üa}$) bei einem nahezu isobaren Druck, der zwischen ca. 73,8 bar und 90 bar liegt, abgekühlt wird und
    - dass das $CO_2$ in seiner Strömungsrichtung (c) vor dem Verdampfer (160) durch eine Drossel (150) auf einen Druck unterhalb von 73 bar expandiert wird.

2.  Verfahren nach Anspruch 1, enthaltend den Verfahrensschritt,

    - dass das $CO_2$ in einer Strömungsrichtung (c) entgegen der Strömungsrichtung der Zuluft (ZU) in den Gaskühler (170) des Lufterhitzers (230) strömt, wobei sich das $CO_2$ in einem Temperaturband zwischen ca. 90 und ca. 20 °C, insbesondere zwischen 80 °C und 25 °C, kontinuierlich abkühlt, und die Zuluft (ZU) im Gaskühler (230) in einem Temperaturband mit einem unteren ersten Temperaturwert ($t_{Ge}$) von ca. 15 - ca. 20 °C und einem oberen zweiten Temperaturwert ($t_{Ga}$) von ca. 25 - ca. 60 °C, insbesondere 30 bis 50 °C, kontinuierlich erwärmt wird, so dass sich die Temperaturverläufe der sich erwärmenden Zuluft (ZU) und des sich abkühlenden $CO_2$ aneinander anschmiegen und eine Zunahme der Entropie und ein Verlust an Exergie bei der Wärmeübertragung minimiert sind.

3.  Verfahren nach Anspruch 1 oder 2, enthaltend den Verfahrensschritt,

    - dass die Drehzahl zumindest eines Verdichters (110) des Kältemittelkreislaufs (100) für einen kontinuierlichen Betrieb des Lüftungsheizgerätes (1) über ein Zeitintervall ohne Ein- und Ausschalten, ohne dabei an eine konstante Temperatur ($t_{Ga}$) der Zuluft (ZU) gebunden zu sein, abhängig von einem erforderlichen Wert geregelt ist, insbesondere abhängig von einem Wert eines Leistungsbedarfs, eines Hochdrucks der Wärmepumpe oder einer Temperatur wie der Temperatur ($t_{AU}$) der Außenluft (AU) oder wie der Temperatur($t_R$) der Raumluft.

4. Verfahren nach einem der Ansprüche 1, 2 oder 3,
enthaltend den Verfahrensschritt,

- dass das $CO_2$ in einem Kältemittelunterkühler (140) eines Luftvorwärmers (270), der in Strömungsrichtung (f) des Kältemittels hinter dem Gaskühler (170) und vor der Drossel (150) liegt, gerade so viel Enthalpie (E) zur Unterkühlung des Kältemittels vor dem Luft/Luft-Wärmeübertrager (200) an die strömende Außenluft (AU) abgibt, dass wenigstens ein Einfrieren des Luft/Luft-Wärmeübertragers (200) verhindert ist, insbesondere bei tiefen Temperaturen ($t_{AU}$) der Außenluft (AU) unter -5 °C, dass entweder die Temperatur ($t_{Ga}$) der Zuluft (ZU) ein Wert ist, mit dem die Drehzahl des Verdichters (110) derart geregelt wird, dass der Luft/Luft-Wärmetauscher (200) nicht einfriert, oder sofern hierzu eine höhere Leistung und/oder Drehzahl des Verdichters (110) benötigt wird, die Temperatur ($t_{AU}$) der Außenluft (AU) hinter dem Kältemittelunterkühler (140) auf eine Temperatur ($t_{AU}$) von mindestens -5 - +3 °C gebracht wird.

5. Verfahren nach einem der vorhergehenden Ansprüche,

- enthaltend eine Abtauphase des Verdampfers (160), wobei nach Erkennung einer unzulässig starken Vereisung des Verdampfers (160) eine Heißgasbypass-Abtauung erfolgt, wobei der Gaskühler (170) umgangen wird und beim Abtauen kein Kältemittel durch den Gaskühler (170) geführt ist, wodurch eine Abkühlung der Zuluft (ZU) beim Abtauen vermieden ist und die Lüftung beim Abtauen weiter erfolgt, insbesondere mit einem kleineren Luftvolumenstrom durch den Luft/Luft-Wärmeübertrager (200) als im Heizbetrieb.

6. Verfahren nach einem der vorhergehenden Ansprüche, enthaltend dass in einem Zeitraum vor einer Warmwasserbereitung, bei der das Kältemittel durch einen Gaskühler (130) eines Warmwasserwärmeaustauschers (330) für Warmwasser geleitet ist, zeitweise eine Anhebung der Temperatur ($t_{GA}$) der Zuluft (ZU) über den berechneten Solltemperaturwert der Zuluft (ZU) oder der Raumtemperatur ($t_R$) hinaus erfolgt, so dass ein Gebäude vor der Warmwasserbereitung überheizt wird und sich während der Warmwasserbereitung etwa auf die gewünschte Raumtemperatur ($t_R$) abkühlt, und dass während der Warmwasserbereitung keine Wärme an die Zuluft (ZU) abgegeben wird.

7. Lüftungsheizgerät (1),
mit einem Luft/Luft-Wärmeübertrager (200) zur Übertragung von Wärmeenergie aus einem Abluftstrom (AB) aus zu beheizenden Räumen auf einen Außenluftstrom (AU), mit einem in einer Wärmepumpe in einem Kältemittelkreislauf (100) angeordneten Verdampfer (160), der mit einem Fortluftstrom (FO) aus einem Fortluftkanal (250) beaufschlagbar ist, mit einer Öffnung (161) für Außenluft vor dem Verdampfer (160), durch die die Außenluft (AU) in die Fortluft (FO) für einen ausreichenden Energieeinhalt als Wärmequelle beigemischt werden kann,
**dadurch gekennzeichnet,**

- **dass** ein Gaskühler (170) des Kältemittelkreislaufs (100) in einem Zuluftkanal (220) angeordnet ist,
- der Gaskühler (170) in Luftströmungsrichtung einer Zuluft (ZU) hinter dem Luft/Luft-Wärmeübertrager (200) angeordnet ist,
- im Kältemittelkreislauf $CO_2$ als Kältemittel enthalten ist
- und Wärme vom überkritischen $CO_2$ als Kältemittel auf die Zuluft (ZU) hinter dem Luft/Luft-Wärmeübertrager (200) übertragen wird.

8. Lüftungsheizgerät nach Anspruch 7,
**dadurch gekennzeichnet,**
**dass** ein Kältemittelunterkühler (140) in Strömungsrichtung (g, b) hinter dem Gaskühler (170) und vor der Drossel (150) angeordnet ist, der Kältemittelunterkühler (140) in Strömungsrichtung der Außenluft (AU) vor dem Luft/Luft-Wärmeübertrager (200) angeordnet ist und durch Abgabe von Enthalpie (E) das überkritische $CO_2$ unterkühlt wird und ein Einfrieren des Luft/Luft-Wärmetauscher (200) verhindert ist.

9. Gebäude, mit einem Lüftungsheizsystem nach einem der vorhergehenden Ansprüche,
**dadurch gekennzeichnet,**
**dass** das Gebäude mit Luft beheizt wird, einen spezifischen Wert des Wärmebedarfs ($Q_a$) von weniger als ca. 20 kWh/m$^2$ pro Jahr aufweist und dass das Lüftungsheizgerät des Gebäudes eine spezifische Heizleistung von ca. 5 bis 20 W/m$^2$, insbesondere 7 bis 15 W/m$^2$ aufweist.

**Claims**

1. Process for the operation of a ventilation heating unit (1) with heat recovery in which the outside air (AU) is routed over an air/air heat exchanger (200), the outside air (AU) in the heat exchanger (200) takes up heat from exhaust air (AB), from the air/air heat exchanger (200) entrained air (F0) as a heat source is routed to an evaporator (160) of a heat pump, in order to evaporate a refrigerant medium contained in a refrigerant circuit (100) and outside air (AU) can be added to the entrained air (F0) for a sufficient energy content, including the process steps,

   - that the warmed up supply air (ZU) from the air/air heat exchanger (200) with an initial temperature ($t_{Ge}$) of approx. 15 - 20°C is warmed up in an air heater (230) to a second temperature ($t_{Ga}$), which is above a temperature ($t_{AB}$) of the exhaust air (AB),
   - in a gas cooler (170) of the air heater (230) $CO_2$ as refrigerant medium in a supercritical status gives up heat to the supply air (ZU),
   - in the gas cooler (170) the refrigerant medium of a first status with an initial temperature ($t_{Uee}$) which is supercritical is cooled to a second status with a second temperature ($t_{Uea}$) at an almost isobaric pressure which is between approx. 73.8 bar and 90 bar and
   - that the $CO_2$ is expanded in its direction of flow (c) in front of the evaporator (160) through a throttle (150) to a pressure below 73 bar.

2. Process according to Claim 1, including the process step,

   - that the CO2 flows in a direction of flow (c) counter to the direction of flow of the supply air (ZU) into the gas cooler (170) of the air heater (230), where the $CO_2$ continuously cools down in a temperature range between approx. 90°C and approx. 20°C, in particular between 80°C and 25°C, and the supply air (ZU) in the gas cooler (in 230) is continuously warmed up in a temperature range with a lower first temperature level ($t_{Ge}$) of approx. 15 - approx. 20°C and an upper second temperature level ($t_{Ga}$) of approx. 25 - approx. 60°C, in particular 30 to 50°C, so that the temperature characteristics of the warming up supply air (ZU) and the cooling $CO_2$ adapt with each other and an increase of the entropy and a loss at energy are minimized with the heat transfer.

3. Process according to Claim 1 or 2, including the process step,

   - that the rotation speed of at least one compressor (110) of the refrigerant circuit (100) is controlled for a continuous operation of the ventilation heating unit (1) over a time period without switching on and off without being linked to a constant temperature ($t_{Ga}$) of the supply air (ZU) in this case, dependent on a necessary value, in particular dependent on a value of a power requirement, a high pressure of the heat pump or a temperature as the temperature ($t_{AU}$) of the outside air (AU) or as the temperature ($t_R$) of the room air.

4. Process according to one of the Claims 1, 2 or 3, including the process step,

   - that the $CO_2$ in a refrigerant medium undercooler (140) of an air preheater (270), that is in the direction of flow (f) of the refrigerant medium behind the gas cooler (170) and before the throttle (150), gives up just as much enthalpy (E) for the under-cooling of the refrigerant medium before the air/air heat exchanger (200) to the flowing outside air (AU), so that at least a freezing of the air/air heat exchanger (200) is prevented, in particular with low temperatures (tAU) of the outside air (AU) below -5°C, that either the temperature ($t_{Ga}$) of the supply air (ZU) is a value with which the rotation speed of the compressor (in 110) is controlled in such a way that the air/air heat exchanger (200) does not freeze, or provided that a higher power and/or rotation speed of the compressor (110) is required, the temperature ($t_{AU}$) of the outside air (AU) behind the refrigerant medium undercooler (140) is brought to a temperature ($t_{AU}$) of at least -5 - +3°C.

5. Process according to one of the preceding Claims,

   - including a defrosting phase of the evaporator (160) where, after identification of an inadmissibly strong icing of the evaporator (160) a hot gas bypass-defroster is implemented where the gas cooler is bypassed (170) and with defrosting no refrigerant medium is routed through the gas cooler (170), where a cooling of the supply air (ZU) is avoided with defrosting and the ventilation during defrosting is implemented further, in particular with a smaller air flow rate through the air/air heat exchanger (200) than in the heating operation.

**6.** Process according to one of the preceding Claims, including that in a period before of a hot-water preparation, in case of which the refrigerant medium is routed through a gas cooler (130) of a hot-water heat exchanger (330) for hot water, an increase of the temperature ($t_{GA}$) of the supply air (ZU) is implemented time-related over the calculated setpoint temperature value of the supply air (ZU) or the room temperature ($t_R$), so that a building before the hot-water preparation is overheated and, during hot-water preparation cools down to approximately the required room temperature ($t_R$), and that during hot-water preparation no heat is given to the supply air (ZU).

**7.** Ventilation heating unit (1),
with an air/air heat exchanger (200) for the transfer of thermal energy from an exhaust air flow (AB) from rooms to be heated to an outside airflow (AU), with an evaporator (160) arranged in a heat pump in a refrigerant circuit (100) which is impinge-capable with an entrained air flow (F0) from an entrained air duct (250) with an opening (161) for outside air in front of the evaporator (160), through which the outside air (AU) can be added as a heat source to the entrained air (F0) for a sufficient energy content, identified in that,

- a gas cooler (170) of the refrigerant circuit (100) is arranged in a supply air duct (220),
- the gas cooler (170) in an air flow direction of the supply air (ZU) is arranged behind the air/air heat exchanger (200),
- is included in the refrigerant circuit $CO_2$ as refrigerant media
- and heat from supercritical $CO_2$ as refrigerant media is transferred to the supply air (ZU) behind the air/air heat exchanger (200).

**8.** Ventilation heating unit according to Claim 7,
identified in that,
a refrigerant medium undercooler (140) is arranged in the direction of flow (g, b) behind the gas cooler (170) and in front of the throttle (150), the refrigerant medium undercooler (140) is arranged in the direction of flow of the outside air (AU) before the air/air heat exchanger (200) and the supercritical $CO_2$ is under-cooled through a transfer of enthalpy (E) and a freezing of the air/air heat exchanger (200) is prevented.

**9.** Building, with a ventilation heating system according to one of the preceding Claims,
identified in that,
the building is heated with air, which indicates a specific value of the heat requirement ($Q_a$) of less than approx. 20 kWh/m$^2$ per annum and that the ventilation heater of the building indicates a specific heating capacity of approx. 5 to 20 W/m$^2$, in particular 7 to 15 W/m$^2$.

**Revendications**

**1.** Méthode d'exploitation d'un appareil de ventilation et chauffage (1) avec récupération de chaleur, dans lequel de l'air extérieur (AU) est guidé par l'intermédiaire d'un échangeur de chaleur air/air (200), l'air extérieur (AU) présent dans l'échangeur de chaleur (200) absorbe de la chaleur d'un air sortant (AB), l'air rejeté (F0) provenant de l'échangeur de chaleur air/air (200) est dirigé en tant que source de chaleur sur un évaporateur (160) d'une pompe à chaleur pour évaporer un réfrigérant contenu dans un circuit de réfrigérant (100), et de l'air extérieur (AU) peut être mélangé à l'air rejeté (F0) pour une teneur en énergie suffisante,
comprenant les étapes selon lesquelles

- l'air entrant (ZU) réchauffé par l'échangeur de chaleur air/air (200), à une première température ($t_{Ge}$) d'environ 15 - 20 °C, est réchauffé dans un réchauffeur d'air (230) à une deuxième température ($t_{Ga}$) qui se situe au-dessus d'une température ($t_{AB}$) de l'air sortant (AB),
- dans un refroidisseur de gaz (170) du réchauffeur d'air (230), du $CO_2$ cède, en tant que réfrigérant dans un état supercritique, de la chaleur à l'air entrant (ZU),
- dans le refroidisseur de gaz (170), le réfrigérant est refroidi entre un premier état à une première température ($t_{Üe}$), qui est supercritique, et un deuxième état à une deuxième température ($t_{Üa}$), à une pression pratiquement isobare qui se situe entre 73,8 bar et 90 bar environ, et
- le $CO_2$ est dilaté par un dispositif d'étranglement (150), dans son sens d'écoulement (c) devant l'évaporateur (160), à une pression inférieure à 73 bar.

2. Méthode selon revendication 1,
   comprenant l'étape selon laquelle

   - le $CO_2$ s'écoule dans le refroidisseur de gaz (170) du réchauffeur d'air (230), dans un sens d'écoulement (c) opposé au sens d'écoulement de l'air entrant (ZU), le $CO_2$ se refroidissant en continu dans une bande de températures comprises entre environ 90 et environ 20 °C, en particulier entre 80 °C et 25 °C, et l'air entrant (ZU) se réchauffant en continu, dans le refroidisseur de gaz (230), dans une bande de températures avec une première valeur de température inférieure ($t_{Ge}$) d'environ 15 - 20 °C et une deuxième valeur de température supérieure ($t_{Ga}$) d'environ 25 - 60 °C, en particulier 30 à 50 °C, ce qui fait que les courbes de température de l'air entrant (ZU) qui se réchauffe et du $CO_2$ qui se refroidit se rejoignent et qu'une augmentation de l'entropie et une perte d'exergie sont minimisées lors du transfert de chaleur.

3. Méthode selon revendication 1 ou 2,
   comprenant l'étape selon laquelle

   - la vitesse de rotation d'au moins un compresseur (110) du circuit de réfrigérant (100) est régulée, pour un fonctionnement continu de l'appareil de ventilation et chauffage (1), sur un intervalle de temps sans mise en marche ni arrêt, sans être alors liée à une température constante ($t_{Ga}$) de l'air entrant (ZU), en fonction d'une valeur nécessaire et en particulier en fonction d'une valeur d'un besoin en puissance, d'une haute pression de la pompe à chaleur ou d'une température telle que la température ($t_{AU}$) de l'air extérieur (AU) ou telle que la température ($t_R$) de l'air ambiant.

4. Méthode selon l'une des revendications 1, 2 ou 3,
   comprenant l'étape selon laquelle

   - le $CO_2$ contenu dans un sous-refroidisseur de réfrigérant (140) d'un préchauffeur d'air (270), qui se situe dans le sens d'écoulement (f) du réfrigérant, derrière le refroidisseur de gaz (170) et devant le dispositif d'étranglement (150), cède à l'air extérieur (AU) qui s'écoule juste l'enthalpie (E) de sous-refroidissement du réfrigérant devant l'échangeur de chaleur air/air (200) qui est nécessaire pour au moins empêcher un gel de l'échangeur de chaleur air/air (200), en particulier à de basses températures ($t_{AU}$) de l'air extérieur (AU) inférieures à -5 °C, pour que soit la température ($t_{Ga}$) de l'air entrant (ZU) soit une valeur à laquelle la vitesse de rotation du compresseur (110) est régulée de sorte que l'échangeur de chaleur air/air (200) ne gèle pas, soit, dans la mesure où une puissance et/ou une vitesse de rotation plus importantes du compresseur (110) sont nécessaires à ces fins, la température ($t_{AU}$) de l'air extérieur (AU) derrière le sous-refroidisseur de réfrigérant (140) soit amenée à une température ($t_{Au}$) d'au moins -5 - +3 °C.

5. Méthode selon l'une des revendications précédentes,

   - comportant une phase de dégivrage de l'évaporateur (160), un dégivrage du bypass de gaz très chaud s'effectuant après détection d'un givrage de l'évaporateur (160) d'une importance inadmissible, le refroidisseur de gaz (170) étant contourné et aucun réfrigérant n'étant acheminé par le refroidisseur de gaz et (170) lors du dégivrage, ce qui évite un refroidissement de l'air entrant (ZU) lors du dégivrage et la ventilation continuant à s'effectuer lors du dégivrage, en particulier avec un débit volumique d'air traversant l'échangeur de chaleur air/air (200) qui est plus petit qu'en mode chauffage.

6. Méthode selon l'une des revendications précédentes, selon laquelle, dans une période avant un traitement de l'eau chaude, où le réfrigérant passe par un refroidisseur de gaz (130) d'un échangeur de chaleur (330) pour eau chaude, il s'effectue par moments un relevage de la température ($t_{GA}$) de l'air entrant (ZU) au-dessus de la température de consigne calculée de l'air entrant (ZU) ou de la température ambiante ($t_R$), ce qui fait qu'un bâtiment est surchauffé avant le traitement de l'eau chaude et qu'il se refroidit, pendant le traitement de l'eau chaude, à peu près à la température ambiante souhaitée ($t_R$) et que, pendant le traitement de l'eau chaude, de la chaleur n'est pas cédée à l'air entrant (ZU).

7. Appareil de ventilation et chauffage (1),
   avec un échangeur de chaleur air/air (200) pour le transfert d'énergie thermique d'un courant d'air sortant (AB) provenant de pièces à chauffer à un courant d'air extérieur (AU), avec un évaporateur (160) placé dans une pompe à chaleur, dans un circuit de réfrigérant (100), qui peut être sollicité par un courant d'air rejeté (F0) provenant d'un conduit d'air rejeté (250), avec un orifice (161) pour l'air extérieur, devant l'évaporateur (160), par lequel l'air extérieur (AU) peut être mélangé à l'air rejeté (F0) en tant que source de chaleur pour une teneur en énergie suffisante, **caractérisé en ce**

- **qu'**un refroidisseur de gaz (170) du circuit de réfrigérant (100) est placé dans un conduit d'air entrant (220),
- **que** le refroidisseur de gaz (170) est placé dans le sens d'écoulement d'un air entrant (ZU), derrière l'échangeur de chaleur air/air (200),
- **que** du $CO_2$ est contenu dans le circuit de réfrigérant, en tant que réfrigérant
- et **que** de la chaleur du $CO_2$ supercritique, en tant que réfrigérant, est transmise à l'air entrant (ZU) derrière l'échangeur de chaleur air/air (200).

8. Appareil de ventilation et chauffage selon revendication 7,
**caractérisé en ce**
**qu'**un sous-refroidisseur de réfrigérant (140) est placé dans le sens d'écoulement (g, b), derrière le refroidisseur de gaz (170) et devant le dispositif d'étranglement (150), que le sous-refroidisseur de réfrigérant (140) est placé dans le sens d'écoulement de l'air extérieur (AU), devant l'échangeur de chaleur air/air (200), et que, par cession d'enthalpie (E), le $CO_2$ supercritique est sous-refroidi et qu'un gel de l'échangeur de chaleur air/air (200) est empêché.

9. Bâtiment, avec un système de ventilation et chauffage selon l'une des revendications précédentes,
**caractérisé en ce**
**que** le bâtiment est chauffé à l'air, présente une valeur spécifique du besoin en chaleur ($Q_a$) de moins de 20 kWh/m$^2$ environ par an et que l'appareil de ventilation et chauffage du bâtiment présente une puissance calorifique spécifique d'environ 5 à 20 W/m$^2$, en particulier 7 à 15 W/m$^2$.

Fig. 1

EP 2 620 715 B1

Fig. 2

Fig. 3

Fig. 4

EP 2 620 715 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005002282 A1
- DE 19702903 C2
- WO 2007080162 A2